# DEMANDE DE BREVET EUROPEEN

(11) **EP 1 820 776 A1**
(43) Date de publication de la demande: **22.08.2007**
(21) Numéro de dépôt: 07358002.9
(22) Date de dépôt: 29.01.2007
(51) Int. Cl.: C01B 31/08, C02F 1/28, C02F 1/50, B01J 20/20, B01J 20/32, A01N 25/12, A01N 59/16

(54) **Procédé de fabrication d'un charbon actif bactéricide**

(30) Priorité: 10.02.2006 FR 0601200
(71) Demandeur: Société Anonyme dite Carbio 12, 13715 Carnoux en Provence (FR)
(72) Inventeur: Mestrius, Pierre, 13008 Marseille (FR)
(74) Mandataire: Galup, Cédric Olivier Nicolas

(57) **Abrégé**

L'invention concerne la fabrication d'un charbon actif dont la surface active a été imprégnée d'argent métallique à partir d'un halogénure d'argent, et de ses applications particulièrement comme agent filtrant bactéricide de fluides liquides ou gazeux.

## Description

La présente invention concerne la fabrication d'un charbon actif dont la surface active a été modifiée et recouverte d'un dépôt d'argent métallique, et ses applications, particulièrement comme agent filtrant bactéricide de fluides liquides ou gazeux.

Depuis des décennies des charbons actifs imprégnés à l'argent sont couramment utilisés comme agent de dé-chloration de l'eau pour leur caractère connu et reconnu de stabilisant du développement bactérien en milieu humide. Cependant ils ne présentent aucune propriété bactéricide.

En effet ces charbons actifs sont imprégnés à partir d'une dispersion de nitrate d'argent dans l'eau, ledit sel étant particulièrement soluble dans l'eau. Le dépôt dudit sel à la surface du carbone se traduit par une fixation quasi instantanée sous forme d'amalgames nébuleux de nitrate d'argent (photo 2b). Ce dépôt s'effectue de manière quasiment aléatoire, et, de part cet aspect d'amalgames nébuleux, les zones de fixation sont ponctuellement importantes mais souvent très dispersées les unes des autres à la surface des grains de charbon actif (photo 1b)

Du fait de sa solubilité et de l'aspect nébuleux de ses dépôts, il est aisé de comprendre que ledit sel tend partiellement à se re-dissoudre dans l'eau lors de son utilisation comme filtre. De plus, la dangerosité reconnue à l'argent en tant que métal lourd au delà d'une concentration de 50 microgrammes par litre en dispersion dans l'eau potable, contraint à limiter quantitativement, le taux d'imprégnation à de très faibles quantités de nitrate d'argent. En effet, tout dépôt massiquement trop important, entraîne rapidement des concentrations en argent dissout dans l'eau filtrée hors normes.

Si, à la connaissance du déposant, il n'a jamais été constaté, en utilisation normale, de développement bactérien sur un lit de charbon actif imprégné à l'argent (à l'inverse des charbons actifs traditionnels non imprégnés), on sait qu'une filtration au travers dudit lit de charbon imprégné n'interdit pas une prolifération bactérienne dans l'effluent filtré. En d'autres termes, le passage d'un effluent sur du charbon actif recouvert de nitrate d'argent ne garantit aucunement la stérilisation dudit effluent. Pour la stérilisation de l'eau ainsi filtrée il est donc nécessaire d'ajouter au système de filtration un dispositif supplémentaire de stérilisation (injection d'additifs bactéricides, dispositif photo-catalytique, lampe UV....)

De manière surprenante et inattendue, l'inventeur a constaté qu'un charbon actif imprégné selon le procédé de l'invention, présente d'intéressantes propriétés bactéricides sur une grande variété de bactéries, comme par exemple sur des souches Gram + comme les Staphylocoques ou des souches Gram - comme les Légionelles, les Salmonelles, les colibacilles (*E.Coli*), les Shigelles ou encore les Pseudomonas.

Pour cela l'inventeur a utilisé du chlorure d'argent qui est un sel insoluble dans l'eau, au lieu du nitrate tel qu'utilisé habituellement.

Par analyse au microscope électronique à balayage sous rayons X, on constate que le dépôt d'argent métallique réalisé suivant la nouvelle méthode d'imprégnation selon l'invention, est du type microcristallin, relativement régulièrement réparti sur la quasi-totalité de la surface des grains de charbon actif (Photo 1a). On constate de plus que les cristaux d'argent sont parfaitement liés et solidaires du carbone (Photo 2a). L'inventeur a étendu son procédé d'imprégnation à tout halogénure d'argent.

Ainsi l'invention a pour objet premier un procédé de préparation de charbon actif imprégné à l'argent métallique présentant des propriétés bactéricides, caractérisé en ce que :
a) on prépare une solution d'halogénure d'argent dans de l'ammoniaque (solution A) en veillant à n'utiliser que le minimum possible d'ammoniaque ;
b) on pulvérise, dans un réacteur, la solution A en très fin brouillard sur du charbon actif, sous agitation, afin d'obtenir un dépôt moyen d'argent métal déterminé à l'avance ;
c) on chauffe le contenu du réacteur en ambiance réductrice ;
d) on refroidit le charbon actif, en présence continue de vapeur d'eau.

A l'étape a) il est important de n'utiliser qu'une quantité minimale d'ammoniaque, celui-ci ayant un effet inhibiteur de la surface active du charbon ; il est donc fortement déconseillé de travailler en fort excès d'ammoniaque.

Selon l'invention, la solution A peut être préparée en utilisant entre 5 et 12 cm³, préférentiellement entre 6 et 11 cm³, d'ammoniaque à une concentration comprise entre 12 et 38 degrés baumé (°Bé) (27,7 à 424,4 g/l), préférentiellement entre 25 et 38 °Bé (228,6 à 424,4 g/l), par gramme d'halogénure d'argent à imprégner. Selon l'invention, une concentration préférée est 28° Bé (243,6 g/l) par gramme d'halogénure d'argent à imprégner.

Selon l'invention, l'halogénure d'argent peut être choisi parmi le chlorure, l'iodure, ou le bromure d'argent et préférentiellement selon l'invention, on utilise le chlorure d'argent.

Selon l'invention, à l'étape b) on pulvérise généralement une quantité de solution A telle que l'on obtienne le dépôt d'une quantité moyenne d'argent métallique comprise entre 0,1 et 3,5 g par kilogramme de charbon actif à 5% d'humidité, préférentiellement entre 0,15 et 2 g par kilogramme. Par exemple une quantité préférentielle d'argent métallique déposée est d'environ 1,2 g d'Ag / Kg de charbon actif.

La masse d'argent déposée en surface du charbon affectant considérablement le prix de revient du produit fini, il est évident qu'au delà de ces valeurs, l'intérêt économique d'un tel produit perdrait toute crédibilité ; même s'il est vrai que techniquement on pourrait fixer des quantités bien supérieures de chlorure d'argent avant d'être pénalisés par des valeurs critiques de métal dispersé dans l'eau potable, après filtration.

L'étape c) du procédé selon l'invention a pour but d'éliminer l'ammoniaque. En effet, lorsque l'imprégnation est achevée, le charbon a perdu une grande partie de son activation par inhibition des sites actifs par l'ammoniaque.

Selon l'invention, à l'étape c), on chauffe le contenu du réacteur dans une plage de température comprise entre 450 et 750 °C, préférentiellement entre 550 et 650 °C, dans une ambiance réductrice. Selon un mode de réalisation particulier préféré de l'invention, l'ambiance réductrice peut être obtenue par injection de vapeur d'eau, préférentiellement en continu, dans le réacteur. A cet égard le réacteur peut être équipé d'une évacuation des gaz avec soupape de sécurité tarée à quelques centaines de grammes.

Cette opération permet l'élimination de l'ammoniaque fixé sur le carbone et sur les ions chlorures, sous forme de chlorure d'ammonium, tout en libérant les sites du carbone qu'il occupait. Cela permet d'obtenir un charbon imprégné à l'argent métallique dont la surface active, exempte d'ammoniaque est au minimum égale à 85% de sa surface active initiale, c'est-à-dire du même charbon non imprégné.

Selon l'invention l'étape c) de chauffage peut durer entre 20 et 60 minutes, préférentiellement entre 30 et 40 minutes, temps théoriquement suffisant, au bout duquel on ne constate plus d'odeur d'ammoniac dans la vapeur d'eau sortant du réacteur.

Selon l'invention, l'étape d) de refroidissement est réalisée en présence continue de vapeur d'eau. Toute méthode de refroidissement peut être utilisée selon l'invention. Préférentiellement on arrête le chauffage du réacteur. La phase de refroidissement se poursuit alors jusqu'à abaissement de la température aux alentours de 150-200°C.

L'abaissement final de la température aux alentours de 40 à 50 °C peut être réalisé soit par simple échange thermique entre le réacteur et l'air extérieur, soit par une pulvérisation succincte d'eau sur le charbon actif toujours maintenu sous agitation.

Selon une variante préférentielle de l'invention, on effectue un conditionnement préalable de la surface active du charbon actif pour faciliter l'adsorption de la solution A Cette opération de conditionnement consiste à pulvériser dans un réacteur agité, un brouillard d'une dissolution d'acide chlorhydrique dans de l'eau à une concentration comprise entre 2,5 et 7 % en poids, préférentiellement 5%.

Ce conditionnement a pour but de ramener le pH de la surface du charbon actif de 10/11 à un pH compris entre 5 et 9 et préférentiellement à 7-8.

Il est important de noter que cette opération n'est pas obligatoire mais qu'elle a l'avantage de ralentir la vitesse d'adsorption du sel d'argent, et limite donc les phénomènes de blocage de surface par effet d'astringence. En outre, dans la phase d'imprégnation de la solution A (étape b) l'ammoniaque réagira en priorité avec les ions chlorures libres avant de se fixer sur les sites libres du carbone. Ceci peut être important car l'énergie de rupture de liaison à fournir pour rompre une liaison Chlore-Azote est bien inférieure à celle qui faut fournir pour rompre une liaison Carbone-Azote.

Dans cette variante de réalisation de l'invention, l'étape c) du procédé peut être réalisée à une température comprise entre 350 et 600°C, préférentiellement entre 400 et 550°C, très préférentiellement aux alentours de 500° C.

Selon l'invention, toutes les étapes du procédé peuvent être réalisées en cuve ou en enceinte ouvertes, par trempage du charbon actif dans les solutions. Seule l'étape c) qui nécessite un chauffage à haute température doit être réalisée dans une enceinte confinée et en milieu réducteur afin de ne pas oxyder le carbone.

Selon encore une autre forme de réalisation de l'invention, une phase de séchage du charbon actif peut intervenir avant la phase de décontamination (étape c). Pour cela le charbon obtenu à l'étape b) peut être placé soit en étuve à 100°C soit en réacteur aux alentours de 150-200°C.

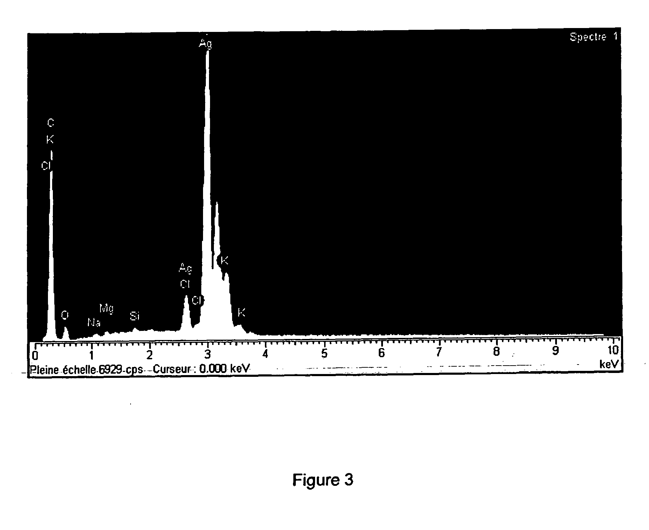

Sans pour autant préjuger du mécanisme d'action réel du charbon actif obtenu par le procédé selon l'invention, l'effet bactéricide puissant du charbon actif semble être obtenu par la combinaison de la bonne répartition de l'argent métallique sur toute la surface des grains de charbon actif associée à la présence d'ions chlorures résiduels, également fixés sur le carbone (Figure 3).

L'invention a encore pour objet un charbon actif imprégné à l'argent métallique susceptible d'être obtenu par le procédé décrit précédemment.

L'invention a aussi pour objet l'utilisation d'un halogénure d'argent dans la préparation de charbon actif imprégné à l'argent métallique.

Le charbon actif imprégné par le procédé selon l'invention est un simple support d'utilisation et peut être conditionné dans tout type de filtre, particulièrement pour eau ou pour gaz, existant et prévu à cet effet sous réserve de respecter les temps de contact et autres paramètres techniques habituellement imposés par l'utilisation de ce type de produit. Il est non polluant et sans risque particulier pour l'environnement. Sa durée de vie est parfaitement comparable à celle des produits existant à ce jour sur le marché. Sa mise en oeuvre est simple et parfaitement comparable avec celle des autres types de charbons actifs utilisés à ce jour.

Ainsi le charbon actif imprégné à l'argent métallique susceptible d'être obtenu par le procédé décrit précédemment peut être utilisé dans toutes les applications du charbon actif connues à ce jour. L'utilisation du charbon actif de l'invention aura l'avantage d'apporter en plus une notion de stérilisation méconnue jusqu'à présent dans l'utilisation d'un charbon actif.

L'adsorbant solide, le charbon actif imprégné, obtenu selon l'invention a, de part ses capacités électrochimiques particulières, vocation à être utilisé préférentiellement comme agent bactéricide filtrant les fluides, comme l'eau, les solutions aqueuses, les gaz ou l'air contaminés par des bactéries.

Selon l'invention le charbon actif peut être utilisé soit sous forme de grains, en lit filtrant (pour les liquides et les gaz), soit sous forme de poudre dispersée dans un liquide. Parmi les applications industrielles et civiles envisageables on peut citer la déchloration de l'eau potable, la décontamination d'eau polluée, la potabilisation d'eau accidentellement contaminée par des bactéries, dans la filtration d'eau de tour d'aéro-réfrigérant afin de supprimer les Légionella et autres bactéries, dans la filtration d'eau sanitaire dans les hôpitaux et autres centres médicaux, hospices, dans le traitement préventif d'air recyclé (habitacles clos, voitures, avions, habitations, aéroports, halls de bâtiments publics, sites stratégiques...) mais aussi comme agent filtrant de masques respiratoires médicaux ou militaires (limitation des risques en cas de « guerre bactériologique », ou dans les appareils d'assistance respiratoire.

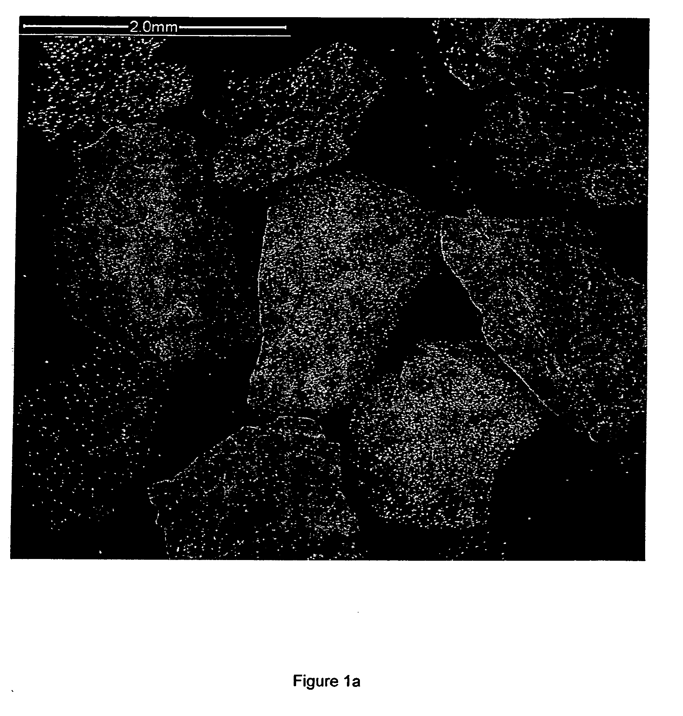

La figure 1a présente des grains de charbon actif obtenu selon le procédé de l'invention (grossissement 6,4 cm = 2 mm).

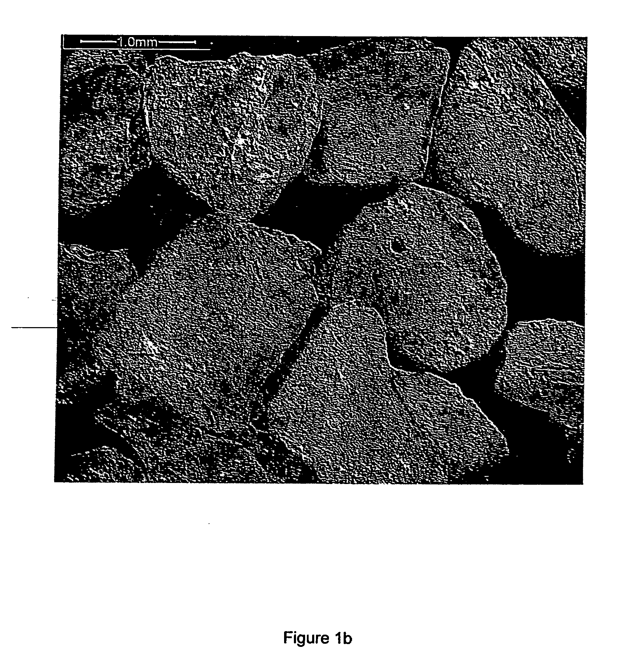

La figure 1b présente des grains de charbon actif obtenus par imprégnation classique au nitrate d'argent (grossissement 3,3 cm = 1 mm).

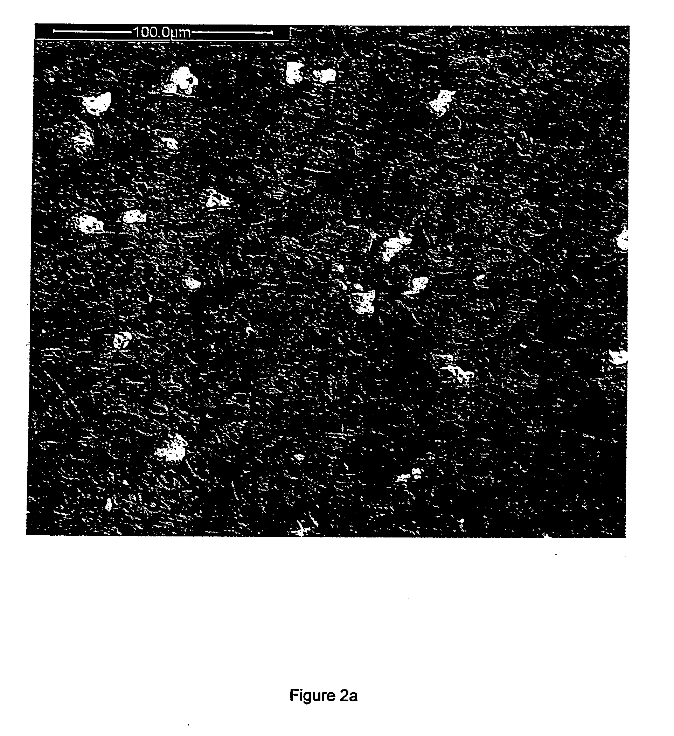

La figure 2a présente des grains de charbon actif obtenu selon le procédé de l'invention (grossissement 5,6 cm = 100 µm).

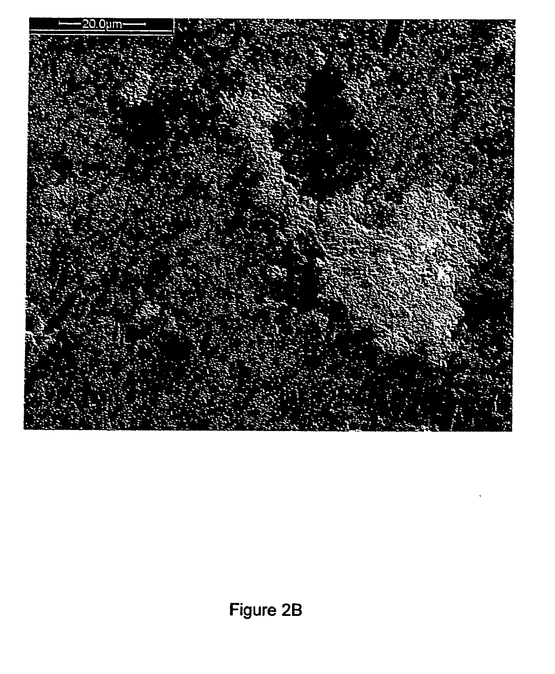

La figure 2b présente des grains de charbon actif obtenus par imprégnation classique au nitrate d'argent (grossissement 2,6 cm = 20 µm).

La figure 3 montre le spectre obtenu par spectrométrie de masse de Marque FEI Company, modèle Environnement QUANTA 200 FEG, module micro analyse de type X INCA Energy 350 (Oxford Instrument), d'un grain d'argent fixé au charbon actif selon l'invention.

D'autres caractéristiques de l'invention apparaîtront à la lecture des exemples qui suivent et qui ne sont donnés qu'à titre illustratif sans limitation de l'invention.

Exemple 1 : Préparation de 1 Kg de charbon actif imprégné à 1200 mg d'argent métallique selon le procédé de l'invention :
a) on prépare une solution A en réalisant la dissolution de 2,4 g de chlorure d'argent dans 24 cm3 d'ammoniaque à 28° Bé.
b) on prépare une solution B de conditionnement de surface du charbon par addition de 4 cm3 d'acide chlorhydrique dans 150 cc d'eau distillée (quantité déterminée expérimentalement comme étant suffisante pour obtenir un pH de charbon actif de 8).
c) On place 1 Kg de charbon actif d'origine noix de coco à 1400 m²/g environ, dans un réacteur muni d'un agitateur mécanique. A l'aide d'un pulvérisateur on pulvérise manuellement la solution B sur le charbon sous agitation permanente. Puis on fait de même avec la solution A, et laisse sous agitation quelques minutes (4 à 5 minutes environ) pour laisser le temps à l'argent de migrer vers ses sites préférentiels et de se fixer.
d) Le réacteur est alors fermé, et mis en chauffe. Dans le même temps le circuit d'injection vapeur est ouvert, et la vapeur d'eau est injectée directement dans le réacteur à raison de 1,5 Kg de vapeur par heure et par Kg de charbon actif. La température interne du lit de charbon actif est contrôlée et on poursuit la chauffe jusqu'à atteindre une température du lit de 500°C. Au bout d'environ 30 mn. et après s'être assuré que la vapeur d'eau sortant du système ne sente plus du tout l'ammoniac, on stoppe la chauffe tout en laissant la vapeur d'eau entrer et sortir du réacteur. Progressivement la température chute de 500 à 170-180°C. On ferme alors l'injection de vapeur, on ouvre le réacteur et on laisse le charbon actif imprégné se refroidir jusqu'à une température acceptable pour sa manipulation sans risque.

Le charbon actif obtenu est alors conforme à son utilisation en tant que support filtrant bactéricide.

### Exemple 2 : Effet bactéricide du charbon actif obtenu selon l'invention comparé à un charbon actif classique

L'activité bactéricide du charbon actif obtenu à l'exemple 1 (CA1) sous forme de granulés est évaluée dans un essai comparatif réalisé avec du charbon actif conventionnel, charbon activé thermiquement, non imprégné(CA2) également sous forme de granulés.

La quantité de charbon testée est de 400 mg par ml.

Les souches bactériennes testées sont : *Escherichia coli, Pseudomonas aeruginosa, Staphylococcus aureus, Salmonella typhi, Shigella spp et Legionella pneumophila*.

Les milieux de culture utilisés sont
Milieu Drigalski pour l'isolement de *E. coli* et de *P. aeruginosa ;*
Milieu Chapmann pour l'isolement de *S. aureus* ;
Milieu Hektoen pour l'isolement de *S. typhi* et de *Shigella spp* et
Milieu BCYE avec cystéine pour l'isolement de *L. pneumophila.*

Des suspensions bactériennes sont préparées par culture des souches dans les milieux adéquats à 37°C jusqu'à obtention d'une densité optique de la culture correspondant à une concentration bactérienne de 1,5 10⁹ bactéries/ml, mesuré par comparaison de la densité optique de la culture à celle d'un standard de type Mc Farland de BioMérieux.

Le charbon actif est conditionné dans des cartouches au travers desquelles-on-fait passer 1 ml de suspension bactérienne à 10⁶ bactéries par ml.

La mise en contact du la suspension bactérienne est mise en contact avec le charbon actif pendant 10 minutes, 20 minutes, 1 heure et 2 heures.

Le filtrat obtenu est alors remis culture sur milieu solide et le comptage des colonies est réalisé 24 heures après pour toutes les souches (*Escherichia coli, Pseudomonas aeruginosa, Staphylococcus aureus, Salmonella typhi* et *Shigella spp*) sauf pour *Legionella pneumophila* pour laquelle le comptage est réalisé au bout de 15 jours.

Le tableau suivant (Tableau 1) présente les résultats obtenus.

**Tableau 1**

| Temps (en minutes) | Charbon testé | Souches | | | | | |
|---|---|---|---|---|---|---|---|
| | | 1 | 2 | 3 | 4 | 5 | 6 |
| 10 | CA1 | 10⁵ | 10⁵ | 100 | 100 | 0 | 0 |
| | CA2 | 10⁶ | 10⁶ | 10⁶ | 10⁶ | 5 | 10⁵ |
| 20 | CA1 | 10³ | 10⁴ | 0 | 0 | 0 | 0 |
| | CA2 | 10⁵ | 10⁵ | 10⁵ | 10⁶ | 5 | 10⁵ |
| 60 | CA1 | 0 | 10³ | 0 | 0 | 0 | 0 |
| | CA2 | 10⁵ | 10⁵ | 10⁴ | 10⁶ | 3 | 10⁵ |
| 120 | CA1 | 0 | 0 | 0 | 0 | 0 | 0 |
| | CA2 | 10⁴ | 10⁵ | 10⁴ | 10⁵ | 2 | 10⁴ |

| | | | | | | | |
|---|---|---|---|---|---|---|---|
| 1 : *Staphylococcus aureus* 2 : *Escherichia coli* 3 : *Shigella spp* 4 : *Pseudomonas aeruginas* 5 : *Legionella pneumophila* 6 : *Salmonella typhi* | | | | | | | |

L'activité bactéricide du charbon selon l'invention (CA1) est meilleure sur toutes les souches testées dès 10 minutes de contact entre le charbon et le milieu contaminé.

L'efficacité du charbon selon l'invention a été testée sur un milieu contaminé par *Escherichia coli* à raison de 10³ bactéries/ml (contamination moyenne d'un effluent). Les résultats sont présentés dans le tableau 2 suivant :

| Temps (en minutes) | CA1 | CA2 |
|---|---|---|
| 10 | 10³ | 10³ |
| 20 | 10² | 10³ |
| 60 | 0 | 10³ |
| 120 | 0 | 10³ |

L'efficacité du charbon selon l'invention est maximale dès 60 minutes de contact.

## Revendications

1. Procédé de préparation de charbon actif imprégné à l'argent métallique présentant des propriétés bactéricides, **caractérisé en ce que** :
a) on prépare une solution d'halogénure d'argent dans de l'ammoniaque (solution A) ;
b) on pulvérise, dans un réacteur, la solution A en très fin brouillard sur du charbon actif, sous agitation, afin d'obtenir un dépôt moyen d'argent métal déterminé à l'avance ;
c) on chauffe le contenu du réacteur en ambiance réductrice ;
d) on refroidit le charbon actif, en présence continue de vapeur d'eau.

2. Procédé selon la revendication 1, **caractérisé en ce que** à l'étape a), la solution A est préparée en utilisant entre 5 et 12 cm³, préférentiellement entre 6 et 11 cm³, d'ammoniaque à une concentration comprise entre 12 et 38 degrés baumé (°Bé) (27,7 à 424,4 g/l), préférentiellement entre 25 et 38 °Bé (228,6 à 424,4 g/l), par gramme d'halogénure d'argent à imprégner.

3. Procédé selon l'une quelconque des revendications 1 ou 2, **caractérisé en ce que** l'halogénure d'argent peut être choisi parmi le chlorure, l'iodure, ou le bromure d'argent et préférentiellement selon l'invention, on utilise le chlorure d'argent.

4. Procédé selon l'une quelconque des revendications 1 à 3, **caractérisé en ce que** à l'étape b) on pulvérise une quantité de solution A telle que l'on obtienne le dépôt d'une quantité moyenne d'argent comprise entre 0,1 et 3,5 g par kilogramme de charbon actif à 5% d'humidité, préférentiellement entre 0,15 et 2 g par kilogramme.

5. Procédé selon la revendication 4, **caractérisé en ce que** la quantité d'argent déposée est 1,2 g d'Ag / Kg de charbon actif.

6. Procédé selon l'une quelconque des revendications 1 à 5, **caractérisé en ce qu'**à l'étape c), on chauffe le contenu du réacteur dans une plage de température comprise entre 450 et 750 °C, préférentiellement entre 550 et 650 °C, dans une ambiance réductrice.

7. Procédé selon la revendication 6, **caractérisé en ce que** l'ambiance réductrice est obtenue par injection de vapeur d'eau, préférentiellement en continu, dans le réacteur.

8. Procédé selon l'une quelconque des revendications 6 ou 7, **caractérisé en ce que** le chauffage dure entre 20 et 60 minutes, préférentiellement entre 30 et 40 minutes.

9. Procédé selon l'une quelconque des revendications 1 à 8, **caractérisé en ce que** la phase de refroidissement se poursuit jusqu'à abaissement de la température à 40 à 50 °C.

10. Procédé selon l'une quelconque des revendications 1 à 9, **caractérisé en ce qu'**on effectue un conditionnement préalable de la surface active du charbon actif.

11. Procédé selon la revendication 10, **caractérisé en ce qu'**on pulvérise dans un réacteur agité, un brouillard d'une dissolution d'acide chlorhydrique dans de l'eau à une concentration comprise entre 2,5 et 7 % en poids, préférentiellement 5%.

12. Procédé selon l'une quelconque des revendications 10 ou 11, **caractérisé en ce que** l'étape c) du procédé peut être réalisée à une température comprise entre 350 et 600°C, préférentiellement entre 400 et 550°C, très préférentiellement à 500° C.

13. Procédé selon l'une quelconque des revendications 1 à 12, **caractérisé en ce qu'**il comporte une étape supplémentaire de séchage du charbon obtenu à l'étape b), avant la phase de décontamination (étape c).

14. Utilisation d'un halogénure d'argent dans un procédé de préparation de charbon actif imprégné à l'argent métallique tel que décrit dans l'une quelconque des revendications 1 à 13.

15. Charbon actif imprégné à l'argent métallique susceptible d'être obtenu par le procédé tel que décrit dans l'une quelconque des revendications 1 à 13.

16. Charbon actif imprégné à l'argent métallique selon la revendication 15, dont la surface active, exempte d'ammoniaque est au minimum égale à 85% de sa surface active initiale.

17. Utilisation du charbon actif selon l'une quelconque des revendications 15 ou 16, sous forme de grains, en lit filtrant (pour les liquides et les gaz), ou sous forme de poudre dispersée dans un liquide.

18. Utilisation du charbon actif selon l'une quelconque des revendications 15 ou 16" pour la déchloration de l'eau potable, la décontamination d'eau polluée, la potabilisation d'eau accidentellement contaminée par des bactéries, dans la filtration d'eau de tour d'aéro-réfrigérant, dans la filtration d'eau sanitaire dans les hôpitaux et autres centres médicaux, hospices, dans le traitement préventif d'air recyclé, comme agent filtrant de masques respiratoires médicaux ou militaires, ou dans les appareils d'assistance respiratoire.

19. Utilisation du charbon actif selon l'une quelconque des revendications 15 ou 16, pour le traitement de milieux contaminé par une souche bactérienne Gram + ou Gram -.

20. Utilisation selon la revendication précédente pour le traitement de milieux contaminés par des Staphylocoques ou des Légionelles, des Salmonelles, des colibacilles (*E.Coli*), des Shigelles ou encore des Pseudomonas.
